# EUROPÄISCHE PATENTSCHRIFT

(11) **EP 0 724 084 B1**
(45) Veröffentlichungstag und Bekanntmachung des Hinweises auf die Patenterteilung: **21.06.2000**
(21) Anmeldenummer: 95119905.8
(22) Anmeldetag: 16.12.1995
(51) Int. Cl.: F16B 12/50, A47B 96/14, F16B 12/46

(54) **Kantenelement für Rahmenkonstruktion in Leichtbauweise**
Edge element for light frame construction
Elément de bord pour construction d'un cadre léger

(30) Priorität: 20.12.1994 DE 9420218 U
(43) Veröffentlichungstag der Anmeldung: 31.07.1996
(73) Patentinhaber: Schüle, Helmut, 72135 Dettenhausen (DE)
(72) Erfinder: Schüle, Helmut, 72135 Dettenhausen (DE)
(74) Vertreter: Klocke, Peter, Dipl.-Ing.

(56) Entgegenhaltungen:
- DE-C- 705 711
- DE-C- 4 220 212
- FR-A- 2 308 003
- US-A- 3 188 693
- US-A- 4 399 754

## Beschreibung

Die vorliegende Erfindung betrifft ein Kantenelement gemäß dem Oberbegriff des Anspruchs 1. Sie betrifft ferner ein Stützelement aus mindestens drei Kantenelementen, sowie eine Eckverbindung für eine Rahmenkonstruktion aus mehreren Kantenelementen.

Bei der Herstellung von Rahmenkonstruktionen aus Holz oder Metall in Leichtbauweise ist eine stabile und hochbelastbare Eckverbindung immer ein Problem. Bei Holz werden die an einer Ecke zusammenstoßenden einzelnen Kantenelemente über Winkel oder Zapfen mittels Leim oder Schraubverbindungen miteinander verbunden. Bei Metallrohrkonstruktionen, die hoch-belastbar sein müssen, werden die einzelnen Kantenelemente miteinander verschweißt und gegebenenfalls mittels einer Strebe zusätzlich verstärkt. Diese Verbindungstechniken sind relativ aufwendig und optisch nicht besonders ansprechend.

Aus der US-A-3 188 693 ist ein Kantenelement gemäß dem Oberbegriff des Anspruchs 1 bekannt. Dieses Kantenelement kann über zusätzliche Eckelemente mit weiteren Kantenelementen verbunden werden, wobei diese Eckelemente in dem Zwickel angeordnet sind, der sich durch die Anlage der gebogenen Enden bildet. Bei dieser Verbindung der Kantenelemente liegen diese alle in einer Ebene. Zur Erzeugung eines dreidimensionalen Körpers wird mittels einer oder mehrerer Verbindungsstangen, die jeweils mit den Eckelementen verbunden sind, eine Verbindung zu weiteren in einer Ebene liegenden und miteinander verbundenen Kantenelementen hergestellt. Gemäß diesem Stand der Technik sind somit zusätzliche Elemente für die Herstellung eines dreidimensionalen Körpers erforderlich. Außerdem kommen Kantenelemente mit verschiedenen Längen und Biegungen zum Einsatz.

Der vorliegenden Erfindung liegt daher die Aufgabe zugrunde, eine Möglichkeit für eine einfache, jedoch stabile und hochbelastbare Verbindung in Leichtbauweise für Rahmenkonstruktionen jeglicher Art vorzuschlagen.

Diese Aufgabe wird durch ein Kantenelement gemäß dem kennzeichnenden Teil des Anspruchs 1, sowie ein Stützelement gemäß dem Anspruch 5 und eine Eckverbindung gemäß dem Anspruch 9 gelöst. Weitere vorteilhafte Ausgestaltungen sind den diesbezüglichen rückbezogenen Unteransprüchen zu entnehmen.

Das erfindungsgemäß ausgestaltete Kantenelement weist mindestens ein gekrümmtes Ende mit einer eine Innen- bzw. Außenkrümmung aufweisenden Innen- bzw. Außenkontur auf. Für die Anlage eines zweiten Kantenelements weist das Kantenelement an dem gebogenen Ende eine Ausnehmung auf, die an dem stirnseitigen Ende des Kantenelements offen ist und durch eine in Richtung Außenkontur zeigende erste Anlagefläche und in Richtung einer Längsseite des Kantenelements zeigenden zweiten Anlagefläche, die mit einer der Außenkrümmung des zweiten Kantenelements entsprechenden Krümmung versehen ist, gebildet wird. Das Kantenelement kann einen rechteckigen oder auch runden Querschnitt aufweisen und aus Holz oder Metall hergestellt sein. Sofern das Kantenelement an beiden Enden gekrümmt ist, können die Enden je nach Anwendungsfall auch in verschiedene Richtungen gekrümmt sein. Der Krümmung kann ein Radius oder eine Ellipse oder eine sonstige beliebige Kurvenform zugrunde liegen, je nach dem, was aus dem Kantenelement hergestellt werden soll. Die Ausnehmung an dem gebogenen Ende weist eine gekrümmte Anlagefläche auf, an die sich die gekrümmte Außenkontur eines zweiten Kantenelements anlegen soll, und die daher die gleiche Krümmung aufweisen muß, wie die entsprechende Außenkrümmung des zweiten Kantenelements. Die erste Anlagefläche liegt an der nicht gekrümmten Seite des zweiten Kantenelements an.

Mittels derartig ausgestalteter Kantenelemente kann ein beliebiger dreidimensionaler Körper erstellt werden. Dieser dreidimensionale Körper eignet sich dann für die Erstellung von Rahmenkonstruktionen aus Holz oder Metall in Leichtbauweise, wie beispielsweise Würfel zum Aufbauen von Regalen, Stützelemente für den Möbelbau oder als Eckverbindung im Stahlbau, Containerbau und dergleichen. Insbesondere dann, wenn die Außenkrümmung einen Radius aufweist und die Kantenelemente so ausgestaltet sind, daß sie senkrecht zueinander verbunden werden, können beliebig viele verschiedene Konstruktionen aus nur einem Kantenelement aufgebaut werden. Dadurch wird die Herstellung wesentlich vereinfacht und sehr kostengünstig. So kann beispielsweise bei der Herstellung im Holzbau ein Kantenelement durch Verleimen von umgebogenen Sperrholzplatten in Form von einzelnen Holzwannen in gewünschter Stärke, abtrennen der Seitenelementrohlinge in der gewünschten Breite und Höhe; Erstellen der gewünschten geometrischen sauberen Form und anschließenden Einfräsen der Anlageausnehmung an den gebogenen Enden, sehr schnell und auf einfache Weise eine Vielzahl von Kantenelementen hergestellt werden. Aus diesen Kantenelementen können dann über Würfel die Rahmenkonstruktionen aufgebaut werden. Durch verschieden lange Seitenelemente können entsprechend Quader hergestellt werden. Auch ist es grundsätzlich möglich, durch Änderung der Krümmungen und verschiedene Neigungen der Anlageflächen auch andere Winkel zu erstellen, was jedoch zu einer Vielzahl von verschiedenen Kantenelementen bei der Herstellung der Rahmenkonstruktion führt.

Gemäß einer bevorzugten Ausführungsform erstreckt sich die zweite Anlagefläche über die gesamte Breite des Kantenelements, so daß ein glatter Übergang von einem Kantenelement zum anderen Kantenelement gewährleistet ist. Vorzugsweise weisen die Außenkonturen an beiden Enden die gleiche Außenkrümmung auf, da dadurch sich die Zahl der verschiedenen Kantenelemente reduziert. Zweckmäßigerweise weist die Außenkrümmung einen Radius auf, was den Aufbau von symmetrischen dreidimensionalen Körpern (Würfel, Quader) unterstützt.

Das erfindungsgemäß ausgestaltete Stützelement besteht aus mindestens drei Kantenelementen, wobei zwei Kantenelemente eine ebene Auflagefläche bilden und das zweite Kantenelement in die Ausnehmung des ersten Kantenelements eingreift, während das dritte, in die dritte Dimension zeigende Kantenelement, in die Ausnehmung des zweiten Kantenelements eingreift und das erste Kantenelement an den Anlageflächen des dritten Kantenelements anliegt. Ein derart ausgestaltetes Stützelement aus drei der vorstehend beschriebenen Kantenelementen ist besonders im Möbelbau, z. B. für Tische, Stühle, Regale und dergleichen, geeignet. Die ebene Auflagefläche für den Boden wird durch zwei Kantenelemente gebildet und die anderen Kantenelemente greifen in der vorstehend beschriebenen Art und Weise mit ihren Ausnehmungen in die entsprechenden Kantenelemente ein.

Gemäß einer bevorzugten Ausführungsform weist das erfindungsgemäß ausgestaltete Stützelement ein viertes Kantenelement gegenüber dem zweiten Kantenelement auf, so daß das dritte Kantenelement teilweise in die Ausnehmung des zweiten und des vierten Kantenelements eingreift. Damit wird die Stabilität erhöht, was jedoch zwei verschieden ausgestaltete Kantenelemente erforderlich macht, die sich darin unterscheiden, daß bei den beiden sich gegenüber stehenden Kantenelementen (zweites und viertes Kantenelement) sich die zweite Anlagefläche nur über die Hälfte der gesamten Breite des Kantenelements erstrecken sollte. Damit wird eine gleichzeitige Anlage und sichere Verbindung erreicht. Zusätzlich kann gemäß einer weiteren vorteilhaften Ausgestaltung ein fünftes Kantenelement parallel zu dem ersten Kantenelement angeordnet sein in dessen Ausnehmung das vierte Kantenelement eingreift.

Vorzugsweise sind die Kantenelemente zumindest im Verbindungsbereich identisch ausgebildet und weisen gleiche Außenkonturen auf, da dadurch gerade der besondere Vorteil des erfindungsgemäß ausgestalteten Kantenelements zum Tragen kommt, nämlich die Erstellung von Gegenständen mit möglichst wenig verschiedenen Teilen.

Bei der erfindungsgemäß ausgestalteten Eckverbindung für eine Rahmenkonstruktion aus Holz oder Metall aus den vorstehend beschriebenen Kantenelementen sind die Kantenelemente mit ihren Enden zueinander angeordnet, wobei ein zweites Kantenelement in die Ausnehmung eines ersten Kantenelements eingreift, und ein drittes Kantenelement derart angeordnet ist, daß es in die Ausnehmung des zweiten Kantenelements und das erste Kantenelement in die Ausnehmung des dritten Kantenelements eingreift. Mittels dieser ausgestalteten Eckverbindung kann somit eine Vielzahl von dreidimensionalen Körpern erstellt werden und nahezu jede beliebige Rahmenkonstruktion auf einfache Weise realisiert werden. Besondere Vorteile lassen sich dann erreichen, wenn alle Kantenelemente zumindest gleiche Außenkonturen aufweisen und die Kantenelemente rechtwinklig zueinander anordenbar sind. Dann kann mit einer Kantenelementform in verschiedenen Längen eine Rahmenkonstruktion in Leichtbauweise mit sehr stabilen und hochbelastbaren Eckverbindungen sowohl aus Holz als auch aus Metall aufgebaut werden. Die Innenkontur kann dabei von der Außenkontur verschieden sein.

Nachfolgend wird die Erfindung anhand von Ausführungsbeispielen näher erläutert. Es stellen dar:
- Figur 1: die perspektivische Ansicht eines Kantenelements;
- Figur 2: eine Eckverbindung bzw. ein Stützelement mit drei Schenkeln;
- Figur 3: ein Stützelement mit vier Schenkeln;
- Figur 4: ein Stützelement mit fünf Schenkeln; und
- Figur 5: ein Würfel aus gleichen Kantenelementen.

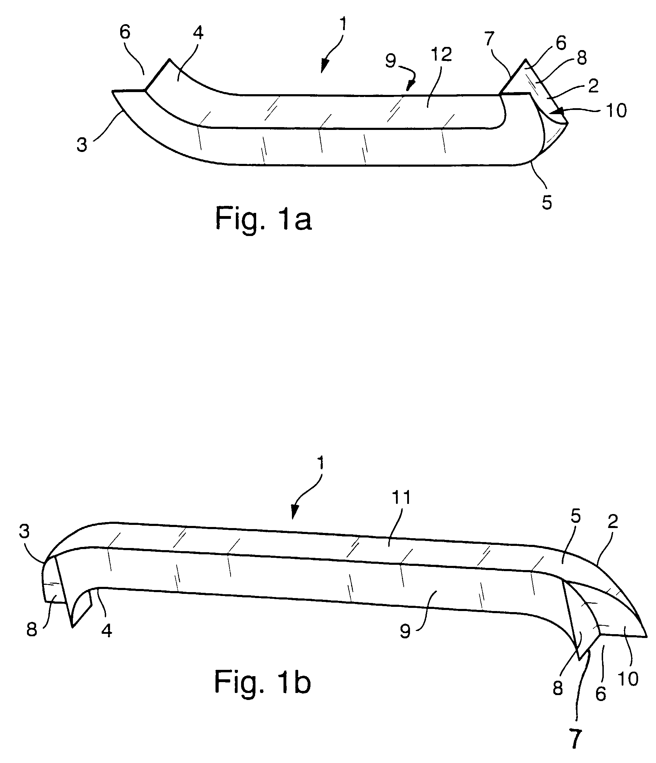

Figur 1a zeigt ein Kantenelement 1 in perspektivischer Ansicht mit zwei gekrümmten Enden 2 und 3, die bei diesem Ausführungsbeispiel in die gleiche Richtung gekrümmt sind. Die Innenkontur 4 ist von der Außenkontur 5 verschieden, mit einem Radius geformt. An den beiden Enden befinden sich Ausnehmungen 6 für die Anlage an ein weiteres Kantenelement. Die Ausnehmung 6 ist zur Stirnseite 7 hin offen und weist eine erste in Richtung Außenkontur 5 zeigende Anlagefläche 8 und eine zweite in Richtung einer der Längsseiten 9 zeigende zweite Anlagefläche 10 auf, die entsprechend der Krümmung der Außenkontur eines zweiten Kantenelements gekrümmt ist. Figur 1b zeigt eine andere perspektivische Ansicht, aus der die einzelnen Anlageflächen zu erkennen sind. Das Kantenelement 1 ist so ausgestaltet, daß es nach Verbindung mit einem zweiten Kantenelement senkrecht zu diesem steht. Selbstverständlich können andere Stellungen durch geänderte Krümmung der Anlagefläche 10 sowie Orientierung der Anlagefläche 8, die beim Ausführungsbeispiel senkrecht zur Oberseite 11 und Unterseite 12 steht, gewählt werden.

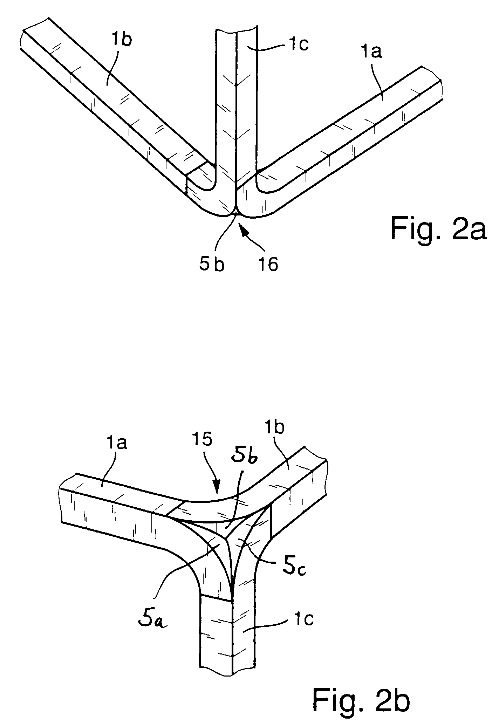

Figur 2 zeigt in Figur 2a ein Stützelement 16 mit drei senkrecht zueinander stehenden Kantenelementen 1a, 1b und 1c für beispielsweise Möbel, wobei die Kantenelemente 1a und 1b eine ebene Auflagefläche bilden und das Kantenelement 1b in der in dieser Figur nicht sichtbaren Ausnehmung des ersten Kantenelements 1a eingreift, und das Kantenelement 1c in die Ausnehmung des Kantenelements 1b eingreift und das Kantenelement 1a an den Anlageflächen des Kantenelements 1c anliegt.

Figur 2b zeigt die Eckverbindung 15 mit drei Kantenelementen 1a, 1b und 1c zum Aufbau von dreidimensionalen Körpern in anderer Ansicht.

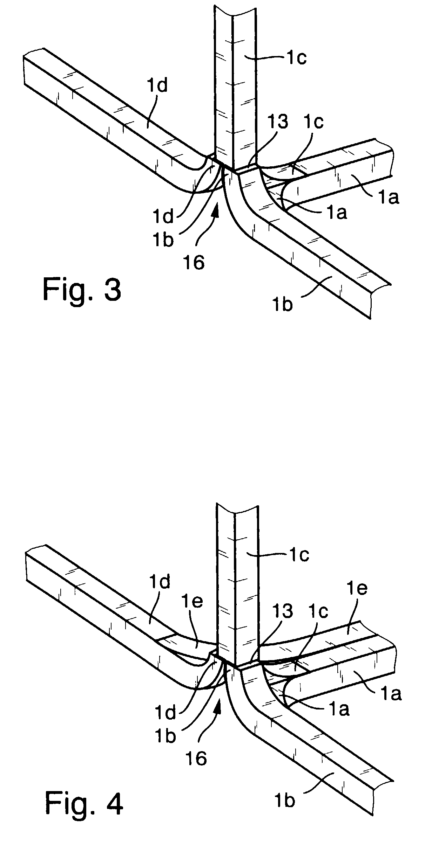

Figur 3 zeigt ein Ausführungsbeispiel für ein Stützelement mit vier Kantenelementen 1a, 1b, 1c und 1d, wobei aber nur die beiden Kantenelemente 1b und 1d eine Ausnehmung 6 mit einer geringeren Tiefe aufweisen, um an dem Kantenelement 1c mittig anzuliegen. Die Enden der beiden Kantenelemente 1b und 1d können dabei noch verjüngt ausgebildet sein, um keinen so starken Absatz 13, wie in Figur 3 dargestellt, aufzuweisen.

Figur 4 zeigt ein Ausführungsbeispiel mit noch einem fünften Kantenelement 1e, das parallel zu dem Kantenelement 1a angeordnet und mit diesem verbunden ist und in dessen Ausnehmung 6 das Kantenelement 1d eingreift.

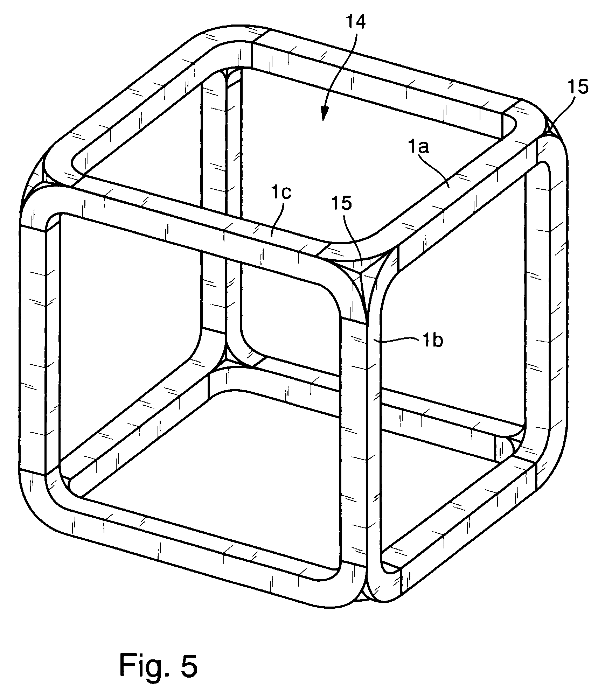

Figur 5 zeigt einen Würfel 14 mit Eckverbindungen 15, die durch die bereits vorstehend beschriebene Verbindung der einzelnen Kantenelemente gebildet werden. Mittels dieser Grundform, oder einer quaderförmigen Grundform, können auf einfache Weise Rahmenkonstruktionen erstellt werden. Die Befestigung der Kantenelemente miteinander erfolgt bei Holz beispielsweise durch einfaches Verleimen und bei Metall durch Verschweißen.

Die mittels dieser Kantenelemente erstellte Verbindung ist hoch belastbar.

## Patentansprüche

1. Kantenelement (1) für einen dreidimensionalen Körper (14) mit mindestens einem gekrümmten Ende (2, 3) mit einer eine Innen- bzw. Außenkrümmung aufweisenden Innen- bzw. Außenkontur (4, 5) für die Anlage eines zweiten Kantenelements, **dadurch gekennzeichnet**, daß das Kantenelement für die Anlage des zweiten Kantenelements an dem mindestens einem gekrümmten Ende (2, 3) eine Ausnehmung (6) aufweist, die zum stirnseitigen Ende (7) des Kantenelements offen ist und durch eine mit ihrer Flächennormalen in Richtung Außenkontur (5) zeigenden ersten Anlagefläche (8) und mit ihrer Flächennormalen in Richtung einer Längsseite (9) des Kantenelements zeigenden zweiten Anlagefläche (10) gebildet wird, wobei die zweite Anlagefläche (10) mit einer der Außenkrümmung des zweiten Kantenelements entsprechenden Krümmung versehen ist.

2. Kantenelement nach Anspruch 1, **dadurch gekennzeichnet**, daß die zweite Anlagefläche (10) sich über die gesamte Breite des Kantenelements (1) erstreckt.

3. Kantenelement nach Anspruch 1 oder 2, **dadurch gekennzeichnet**, daß die Außenkonturen (5) an beiden Enden (2, 3) die gleiche Außenkrümmung aufweisen.

4. Kantenelement nach einem der vorangegangenen Ansprüche, **dadurch gekennzeichnet**, daß die Außenkrümmung einen Radius aufweist.

5. Stützelement aus mindestens drei Kantenelementen nach Anspruch 1, **dadurch gekennzeichnet**, daß zwei Kantenelemente (1a, 1b) eine ebene Auflagefläche bilden und das zweite Kantenelement (1b) in die Ausnehmung (6) des ersten Kantenelements (1a) eingreift, und das dritte, in die dritte Dimension zeigende Kantenelement (1c) in die Ausnehmung (6) des zweiten Kantenelements (1b) eingreift und das erste Kantenelement (1a) an den Anlageflächen (8, 10) des dritten Kantenelements (1c) anliegt.

6. Stützelement nach Anspruch 5, **dadurch gekennzeichnet,** daß ein viertes Kantenelement (1d) gegenüber dem zweiten Kantenelement (1b) angeordnet ist, so daß das dritte Kantenelement (1c) teilweise in jeweils in die Ausnehmung (6) des zweiten (1b) und des vierten (1d) Kantenelements eingreift.

7. Stützelement nach Anspruch 6, **dadurch gekennzeichnet,** daß ein fünftes Kantenelement (1e) parallel zu dem ersten Kantenelement (1a) angeordnet ist, in dessen Ausnehmung (6) das vierte Kantenelement (1d) eingreift.

8. Stützelement nach Anspruch 5, **dadurch gekennzeichnet,** daß die Kantenelemente (1a, 1b, 1c) zumindest im Verbindungsbereich identisch ausgebildet sind und gleiche Außenkonturen aufweisen.

9. Eckverbindung für eine Rahmenkonstruktion aus Holz oder Metall aus Kantenelementen nach einem der Ansprüche 1 bis 4, **dadurch gekennzeichnet,** daß die Kantenelemente mit ihren Enden (2, 3) einander zugewandt angeordnet sind, wobei ein zweites Kantenelement (1b) in die Ausnehmung (6) eines ersten Kantenelements (1a) eingreift, und ein drittes Kantenelement (1c) derart angeordnet ist, daß es in die Ausnehmung (6) des zweiten Kantenelements (1b) und das erste Kantenelement (1a) in die Ausnehmung (6) des dritten Kantenelements (1c) eingreift.

10. Eckverbindung nach Anspruch 9, **dadurch gekennzeichnet,** daß alle Kantenelemente (1a, 1b, 1c) zumindest gleiche Außenkonturen aufweisen.

## Claims

1. An edge element (1) for a three-dimensional body (14) with a least one curved end (2, 3) with an inner or outer contour (4, 5) showing an inner or outer curvature for contacting a second edge element, characterized in that the edge element for contacting the second edge element provides a recess (6) on at least one curved end (2, 3), which is open towards the face end (7) of the edge element, and in a first contact surface (8) whose surface normally points in the direction of the outer contour (5) and a second contact surface (10) whose surface normally points in the direction of a longitudinal side (9) of the edge element, whereas the second contact surface (10) is provided with a curvature corresponding to the outer curvature of the second edge element.

2. An edge element according to claim 1, characterized in that the second contact surface (10) spans the entire width of the edge element (1).

3. An edge element according to claims 1 or 2, characterized in that the outer contours (5) show the same outer curvature at both ends (2, 3).

4. An edge element according to one of the previous claims, characterized in that outer curvature shows a radius.

5. A support element composed of at least three edge elements according to claim 1, characterized in that two edge elements (1a, 1b) build a level contact surface and the second edge element (1b) engages into the recess (6) of the first edge element (1a) and that the third edge element (1c), pointing into the third dimension, engages into the recess (6) of the second edge element (1b) and that the first edge element (1a) contacts the contact surfaces (8, 10) of the third edge element (1c).

6. A support element according to claim 5, characterized in that a fourth edge element (1d) is arranged opposite the second edge element (1b), so that the third edge element (1c) partially engages into each of the recesses (6) of the second (1b) and fourth edge element (1d).

7. A support element according to claim 6, characterized in that a fifth edge element (1e) is arranged parallel to the first edge element (1a), into whose recess (6) the fourth edge element (1d) engages.

8. A support element according to claim 5, characterized in that the edge elements (1a, 1b, 1c) are designed identically at least in the connection area and show the same outer contours.

9. A corner connection for a wooden or metal frame construction made of edge elements according to one of the claims 1 to 4, characterized in that the edge elements are arranged with their ends (2, 3) facing each other, whereas a second edge element (1b) engages into the recess (6) of a first edge element (1a) and a third edge element (1c) is arranged in such a way that it engages into the recess (6) of the second edge element (1b) and that the first edge element (1a) engages into the recess (6) of the third edge element (1c).

10. A corner connection according to claim 9, characterized in that all the edge elements (1a, 1b, 1c) show at least the same outer contours.

## Revendications

1. Elément d'arête (1) pour un corps tridimensionnel (14) avec au moins une extrémité recourbée (2, 3) avec des contours intérieur et extérieur (4, 5) présentant une courbure respectivement intérieure ou extérieure pour le contact d'un second élément d'arête, caractérisé en ce que l'élément d'arête pour le contact du second élément d'arête présente un évidement (6) sur au moins une de ses extrémités recourbées (2, 3), lequel évidement est ouvert sur l'extrémité (7) de face de l'élément d'arête et formé par une première surface de contact (8) dont la normale de surface est orientée en direction du contour extérieur (5) et une seconde surface de contact (10) dont la normale de surface est orientée en direction d'un grand côté (9) de l'élément d'arête, la seconde surface de contact (10) étant pourvue d'une courbure correspondant à l'une des courbures extérieures du second élément d'arête.

2. Elément d'arête selon la revendication 1 caractérisé en ce que la seconde surface de contact (10) s'étend sur toute la largeur de l'élément d'arête (1).

3. Elément d'arête selon la revendication 1 ou 2 caractérisé en ce que les contours extérieurs (5) des deux extrémités (2, 3) présentent la même courbure extérieure.

4. Elément d'arête selon l'une des revendications précédentes caractérisé en ce que la courbure extérieure présente un rayon.

5. Elément d'appui comprenant au moins trois éléments d'arête selon la revendication 1 caractérisé en ce que deux éléments d'arête (1a, 1b) forment une surface de contact plane, en ce que le deuxième élément d'arête (1b) s'engage dans l'évidement (6) du premier élément d'arête (1a), en ce que le troisième élément d'arête (1c) orienté vers la troisième dimension s'engage dans l'évidement (6) du deuxième élément d'arête (1b) et en ce que le premier élément d'arête (1a) porte sur les surfaces de contact (8, 10) du troisième élément d'arête (1c).

6. Elément d'appui selon la revendication 5 caractérisé en ce qu'un quatrième élément d'arête (1d) est disposé en face du deuxième élément d'arête (1b) de sorte que le troisième élément d'arête (1c) s'engage respectivement partiellement dans l'évidement (6) des deuxième (1b) et quatrième (1d) éléments d'arête.

7. Elément d'appui selon la revendication 6 caractérisé en ce qu'un cinquième élément d'arête (1e) est disposé parallèlement au premier élément d'arête (1a) dans l'évidement (6) duquel s'engage le quatrième élément d'arête (1d).

8. Elément d'appui selon la revendication 5 caractérisé en ce qu'au moins dans la zone de jonction, les éléments d'arête (1a, 1b, 1c) sont de forme identique et présentent les mêmes contours extérieurs.

9. Raccord d'angle pour une structure à portiques en bois ou métal comprenant des éléments d'arête selon l'une des revendications 1 à 4 caractérisé en ce que les éléments d'arête sont disposés de façon à ce que leurs extrémités (2, 3) soient tournées les unes vers les autres, un deuxième élément d'arête (1b) s'engageant dans l'évidement (6) d'un premier élément d'arête (1a) et en ce qu'un troisième élément d'arête (1c) est disposé de façon à s'engager dans l'évidement (6) du deuxième élément d'arête (1b) et de manière que le premier élément d'arête (1a) s'engage dans l'évidement (6) du troisième élément d'arête (1c).

10. Raccord d'angle selon la revendication 9 caractérisé en ce que tous les éléments d'arête (1a, 1b, 1c) présentent au moins des contours extérieurs semblables.
